(19)

Europäisches
Patentamt
European
Patent Office
Office européen
des brevets

(11)  **EP 2 432 171 B1**

(12)  **EUROPEAN PATENT SPECIFICATION**

(45) Date of publication and mention
of the grant of the patent:
**13.03.2013 Bulletin 2013/11**

(51) Int Cl.:
***H04L 12/801*** *(2013.01)*

(21) Application number: **10306001.8**

(22) Date of filing: **20.09.2010**

(54) **Device and method for precise scheduling of high layer flows at a low layer of a network**

Vorrichtung und Verfahren zur präzisen Planung von Hochschichtströmen auf einer niedrigen
Netzwerkschicht

Dispositif et procédé pour la programmation précise de flux d'une couche supérieure vers une couche
inférieure d'un réseau

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**21.03.2012 Bulletin 2012/12**

(73) Proprietor: **Thomson Licensing
92130 Issy-les-Moulineaux (FR)**

(72) Inventors:
• **Salonidis, Theodoros
92130, Issy les Moulineaux (FR)**

• **Laufer, Rafael
92130, Issy les Moulineaux (FR)**
• **Lundgren, Henrik
92130, Issy les Moulineaux (FR)**

(74) Representative: **Ruellan-Lemonnier, Brigitte et al
Technicolor
European Patent Operations
1-5 Rue Jeanne d'Arc
92443 Issy-les-Moulineaux Cedex (FR)**

(56) References cited:
**EP-A1- 1 209 862     EP-A1- 1 376 948**

## Description

### Technical field

The present invention relates to networks using a low layer protocol supporting a slotted access.

### Background of the invention

As it is known by the man skilled in the art existing networks are designed in layers according to the OSI model. In these layers protocols operate independently and therefore define a protocol stack where packets of flows at high layers (e.g. application, transport or network layer) are encapsulated in packets of flows of a low layer (e.g. MAC layer) before being transmitted over the air interface by means of a low layer protocol supporting a slotted access, such as a slotted access MAC protocol (for instance the Time Division Multiple Access (TDMA)). For instance, in an IEEE 802.11 network (i.e. a WLAN (Wireless Local Area Network)), IP packets are first encapsulated in MAC frames, which are then transmitted on a single FIFO ("First In First Out") queue at the MAC layer.

This approach provides flexibility with modular design and standardization, but it may also result in severe performance degradation when the protocols do not cooperate well. This is notably the case in wireless multi-hop networks, where noise and interference at lower layers affect the routing and congestion control performed at upper layers. Indeed, any resource allocation mechanisms performed at lower layers apply to the entities of those layers (e.g. nodes or links) but not to the entities of the higher layers (e.g. TCP or IP flows) which matter the most the user-perceived performance. For instance, in an IEEE 802.11e network it is possible to use multiple MAC queues corresponding to priorities, but the number of MAC queues is generally limited by the size of the memory available in the firmware where the MAC protocol is implemented, and therefore the number of MAC layer connections is typically much smaller than the number of flows. Thus MAC layer connections are typically not directly mapped to the higher layer flows and each MAC layer connection may carry several network layer flows. In fact, the MAC layer knows only classes that do not correspond to flows (i.e. higher layer entities). So, the MAC scheduling being performed among the MAC layer connections, there does not exist per-flow scheduling at the MAC level. Thus, although quality of service (QoS) can be provided for each MAC layer connection, it does not necessary provide QoS for the higher layer flows which are the flows reflecting the per-user perceived performance.

The document EP1209862 describes a method of linking two schedulers of a multi-layer network.

### Summary of the invention

The objective of this invention is to offer a method and an associated device allowing a precise scheduling of high layer flows (for instance belonging to application layer, transport layer, network layer or kernel) at a low layer (for instance the MAC layer or firmware) of the protocol stack of a network using a low layer protocol supporting a slotted access (for instance a slotted access MAC protocol) and comprising at least two nodes (each comprising a kernel with a high layer and a firmware with this low layer protocol supporting a slotted access) and a scheduling means for scheduling packet transmissions between these nodes into multi-slot frames.

It is important to note that a low layer protocol is a protocol that belongs to a (low) layer which is located in the OSI model at a level that is lower than the one of another considered layer (called high layer).

More precisely, the invention provides a method comprising the steps of:

- implementing at least one flow queue into each kernel of each node and at least one link queue into each firmware of each node, each link queue being associated to a link established between two nodes for packet transmission, and
- coordinating, in each node, the transfer of packets from its flow queue(s) to its link queue(s) as a function of coordination information provided by its low layer protocol supporting a slotted access to a chosen high layer of the kernel and depending on the packets stored into its link queue(s) and from scheduling information contained into a flow schedule defined for every nodes and for each multi-slot frame by the scheduling means from queue information representative of the number of packets stored, at least, into the flow queues of these nodes.

It is important to note that a low layer protocol is a protocol that belongs to a (low) layer which is located in the OSI model at a level that is lower than the one of another considered layered (called high layer).

The method according to the invention may include additional characteristics considered separately or combined, and notably:

- the queue information may be further representative of the number of packets of each flow that are stored into the link queues of the nodes;

- for each multi-slot frame the scheduling means may compute a flow schedule that comprises a sequence of schedule entries, where each entry contains a n-tuple (f,s,F,L), with n at least equal to four, associated to one of the nodes and comprising a frame number (f), a slot number (s) designating the frame slot during which the concerned node is authorized to transmit, a flow queue identifier (F) designating a flow queue of the concerned node that stores a packet to be transmitted, and a link identifier (L) designating a link of the concerned node from which this packet should be transmitted;

❯ upon reception of a flow schedule in a node, the firmware of this node may determine for each slot of the current frame whether its node is authorized to transmit, and if this is the case it may determine which link queue will be used by the low layer protocol supporting a slotted access and then may transmit the concerned flow packets that are stored in its concerned link queue;
❯ before the beginning of each slot of a frame, the firmware of a node may send a control packet, containing the current frame number and slot number in the firmware and information about each link queue, to its associated kernel to notify about the next slot in order **to** transfer chosen packets to the firmware based on these control packets;

• the information about a link queue may comprise an identifier of this link queue (e.g. the MAC address of the neighbor of the outgoing link), the length of this link queue, and the cumulative number of packets that have been dequeued (i.e. successfully transmitted or dropped) from this link queue;
• upon reception of the information about a link queue, the kernel may

i) determine how many packets are still stored into each link queue since the last control packet,
ii) use the current frame number and slot number in the firmware to synchronize estimates of frame and slot numbers it stores,
iii) look at the flow schedule to drop any entry that corresponds to a frame and a slot that are respectively older than the current frame and slot designated by the current frame number and slot number in the firmware, and
iv) look at the current entry (f,s,F,L) of the flow schedule to determine the number of packets that are stored in the designated link queue, and if there exists at least P stored packets it may consider that this link queue contains enough packets to serve the next P slots and then decide to do not send any other packet to the firmware, while if there exists less than P stored packets it may check if the maximum storage capacity of the firmware has been reached, and if this is the case it may not take any action, while if this is not the case it may transfer at least one stored packet from a concerned flow queue to the concerned link queue;

- the queue information may be transmitted by each node at the end of each frame.

The invention also provides a device, intended for scheduling packet transmissions into a network using a low layer protocol supporting a slotted access (for instance a slotted access MAC protocol) and comprising at least two nodes (each comprising a kernel with a high layer and a firmware with this low layer protocol supporting a slotted access), and comprising a scheduling means for scheduling packet transmissions between these nodes into multi-slot frames.
This device is characterized in that it further comprises, into each node:

- at least one flow queue located into the kernel,
- at least one link queue located into the firmware and associated to a link established between two nodes for packet transmission, and
- a control means arranged for coordinating the local transfer of packets from a flow queue to a link queue as a function of coordination information provided by the local node low layer protocol supporting a slotted access to a chosen high layer of the local node kernel and depending on the packets stored into this link queue and from scheduling information contained into a flow schedule defined for everyone of the nodes and for each multi-slot frame,

and also in that its scheduling means is arranged for defining each flow schedule associated to a frame from queue information representative of the number of packets stored, at least, into the flow queues of the nodes.
The device according to the invention may include additional characteristics considered separately or combined, and notably:

- its scheduling means may be arranged for defining each flow schedule associated to a frame from queue information representative of the number of packets stored into the flow queues of the nodes and of the number of packets of each flow that are stored into the link queues of the nodes;

- its scheduling means may be arranged for computing for each multi-slot frame a flow schedule that comprises a sequence of schedule entries, where each entry contains a n-tuple (f,s,F,L), with n at least equal to four, associated to one of the nodes and comprising a frame number (f), a slot number (s) designating the frame slot during which the concerned node is authorized to transmit, a flow queue identifier designating a flow queue of the concerned node that stores a packet to be transmitted, and a link identifier (L) designating a link of the concerned node from which this packet should be transmitted;

  ➢ each control means may comprise a first part associated to the firmware of its node and arranged, upon reception of a flow schedule by its node, for determining, for each slot of the current frame, whether its node is authorized to transmit and if this is the case which link queue will be used by the low layer protocol supporting a slotted access and then for ordering to its associated firmware transmission of the concerned flow packets that is stored in the concerned link queue;

- each control means may comprise a second part associated to the kernel of its node, and each first part of a control means may be arranged, before the beginning of each slot of a frame, for sending a control packet, containing the current frame number and slot number in the associated firmware and information about each link queue, to the associated kernel to notify its associated control means second part about the next slot in order it could transfer chosen packets to this firmware based on these control packets;

  o the information about a link queue may comprise an identifier of this link queue (e.g. the MAC address of the neighbor of the outgoing link), the length of this link queue, and the cumulative number of packets that have been dequeued (i.e. successfully transmitted or dropped) from this link queue;
  o each second part of a control means may be arranged, upon reception of an information about a link queue,

    i) for determining how many packets are still stored into each link queue since the last control packet,

    ii) for using the current frame number and slot number in the associated firmware to synchronize estimates of frame and slot numbers it stores,

    iii) for looking at the current flow schedule to drop any entry that corresponds to a frame and a slot that are respectively older than the current frame and slot designated by the current frame number and slot number in the associated firmware, and

    iv) for looking at the current entry (f,s,F,L) of the current flow schedule to determine the number of packets that are stored in the designated link queue, and if there exists at least P stored packets for considering that this link queue contains enough packets to serve the next P slots and then for deciding to do not authorized sending of any other packet to the associated firmware, while if there exists less than P stored packets for checking if a maximum storage capacity of the associated firmware has been reached, and if this is the case for not taking any action, while if this is not the case for authorizing transfer of at least one stored packet from a concerned flow queue to the concerned link queue.

The invention also provides a (communication) node, intended for communicating into a network using a low layer protocol supporting a slotted access (for instance a slotted access MAC protocol) and comprising a kernel with a high layer and at least one flow queue of a device such as the one above introduced, a firmware with this low layer protocol supporting a slotted access and at least one link queue of a device such as the one above introduced, and a control means of a device such as the one above introduced.

The invention also provides a network equipment, intended for being part of a network using a low layer protocol supporting a slotted access (for instance a slotted access MAC protocol), and comprising a scheduling means of a device such as the one above introduced.

Brief description of the figures

Other features and advantages of the invention will become apparent on examining the detailed specifications hereafter and the appended drawings, wherein:

- figure 1 schematically and functionally illustrates an example of network comprising four communication equipments (or nodes) linked therebetween, two gateways connected to two communication equipments (or nodes) and to a scheduler, and an example of embodiment of a device according to the invention,

- figure 2 schematically and functionally illustrates an example of embodiment of a communication equipment (or node) according to the invention, considered in the control plane,
- figure 3 schematically and functionally illustrates an example of embodiment of a scheduler (or network equipment) according to the invention, considered in the control plane, and
- figure 4 schematically illustrates the packet processing into an example of embodiment of a communication equipment (or node) according to the invention, considered in the data plane.

<u>Detailed description of the preferred embodiment</u>

The appended drawings may serve not only to complete the invention, but also to contribute to its definition, if need be.

The invention aims at offering a method, and an associated device (D), intended for scheduling high layer flows at a low layer of the protocol stack of a network (WN) using a low layer protocol supporting a slotted access.

In the following description it will be considered that the network (WN) is of the wireless type, and more precisely that it is an IEEE 802.11 network (for instance a WiFi network). But the invention is not limited to this type of network. Indeed it concerns any type of network comprising nodes (or network equipments (Nj)) using a low layer protocol supporting a slotted access. So it may be also a wireline network using a low layer protocol supporting a slotted access (such as a slotted access MAC protocol like Ethernet).

Moreover, in the following description it will be considered that the low layer protocol supporting a slotted access is a slotted access MAC protocol. But the invention is not limited to this type of low layer (of the OSI model). Generally speaking a low layer protocol is a protocol that belongs to a (low) layer which is located in the OSI model at a level that is lower than the one of another considered layered (called high layer).

More, in the following description it will be considered that the slotted access MAC protocol is a Time Division Multiple Access (TDMA) protocol. But the invention is not limited to this type of slotted access MAC protocol. It is also assumed that the TDMA MAC protocol supports basic MAC functionalities such as an ARQ retransmission scheme or bit rate adaptation, for instance.

More, in the following description it will be considered that the high layer is a network layer. But the invention is not limited to this type of high layer (of the OSI model). Indeed the high layer could be also the application layer or the transport layer, for instance.

More, the invention concerns not only networks of the multi-hop type (i.e. comprising routers or access points (APs) connected (or linked) therebetween), but also networks of the single-hop type (i.e. comprising base stations (or any equivalent radio network equipments) serving user (or client) (wireless) communication equipments). It is recalled that a single-hop type network is a particular case of a multi-hop type network.

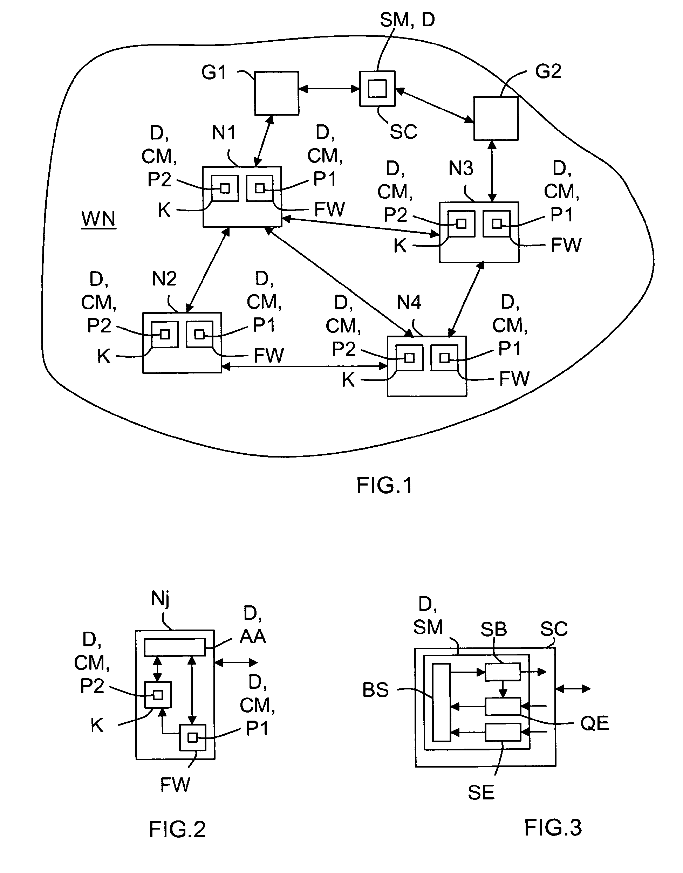

In the example illustrated in figure 1 the network WN comprises two gateways G1 and G2 that are connected to the wired infrastructure of the network WN and may offer access to the Internet, and four nodes (or communication equipments) Nj (j = 1 to 4) that are linked therebetween and act as mobile access points (MAPs) to offer access to the network WN to user communication equipments (such as mobile phones, personal digital assistants (or PDAs), fixed computers or laptops). It is important to note that a gateway G1, G2 could be a node Nj.

Moreover, in the illustrated example the node index j varies from 1 to 4, but the number of nodes Nj may be greater or smaller than four (4), as soon as it is at least equal to two (2).

As illustrated in figures 1, 2 and 4, each node Nj comprises, notably, a kernel K with a high layer (here the network layer as example) and a firmware FW with a low layer protocol supporting a slotted access (here a slotted access MAC protocol). One means here by "layer" one of the seven layers of the OSI model of the protocol stack.

As mentioned before, the invention proposes a method intended for scheduling packet transmissions between nodes Nj into multi-slot frames. Such a method can be implemented by a device D according to the invention.

As it is schematically illustrated in figures 1 to 3, a device D, according to the invention, is distributed into each node Nj of the network WN and into a network equipment SC (here a (network) scheduler). But this device D could be distributed into equipments coupled respectively to the nodes Nj and to a network equipment of the network WN, such as a management or control equipment.

So, a device D can be made of software modules, at least partly, or of electronic circuit(s) or hardware modules, or else of a combination of hardware and software modules (in this case the device D comprises also software interfaces allowing interworking between the hardware and software modules).

As an example of embodiment, in the following description it will be considered that the scheduler SC implements a backpressure algorithm. But the scheduler SC could implement another scheduling algorithm.

It is recalled that the backpressure algorithm assumes a time slot-synchronized wireless network shared by unicast multi-hop flows, where each node Nj maintains a separate queue for each flow. At each slot, a set of links can be activated for transmission. The capacity $\mu_{ij}$ of each wireless link (i,j) in the link transmission set is the maximum rate in bit/s that the wireless link (i,j) can transmit subject to the channel state and the interference due to the other wireless links in the set. Each link transmission set defines a link capacity vector $\mu = (\mu_{ij})$ containing the capacities of the links in the set. The link capacity vectors define the network capacity region $\Lambda$ as a convex hull. If the flows are sent at rates within the capacity region, then a scheduling algorithm is throughput-optimal if it can realize these rates by not allowing any queue to blow to infinity. It can be proven that the backpressure algorithm is throughput-optimal.

The backpressure algorithm comprises several steps that are executed at each time slot and detailed hereafter. At each time slot, the algorithm first assigns a weight to each link that equals the maximum differential queue backlog between its transmitting and receiving nodes and at a next step it activates a transmission set of links that maximize the sum of the product of link weights and link capacities. More specifically, the backpressure algorithm consists of the following steps executed at each time slot.

A first step consists in flow scheduling and routing. For each link (i,j), one selects the flow $f^*_{ij}$ with the maximum queue differential backlog:

$$f^*_{ij} = \arg \max_{f \in F} (q_i^f - q_j^f) \,,$$

where $q_i^f$ and $q_j^f$ are the queue backlogs for flow f at nodes Ni and Nj, respectively. The equation of $f^*_{ij}$ implicitly performs routing by selecting the link (i,j) that each flow will use during the slot. The weight of each link is selected as the weight of flow $f^*_{ij}$: $w_{ij} = \max_{f \in F} (q_i^f - q_j^f) \,.\,.$

A second step consists in a link scheduling. This step selects the link capacity vector $\mu^* = (\mu_{ij})$ that satisfies:

$$\mu^* = \arg \max_{\mu \in \Lambda} \sum_{(i,j)} \mu_{ij} w_{ij} \,,$$

where $p = (\mu_{ij})$ are the link capacity vectors defining the network capacity region $\Lambda$.

A third step consists in packet transmission through the wireless medium. During the considered slot, each node Ni serves the queue of flow $f^*_{ij}$ on link (i,j) using rate $\mu^*_{ij}$

The backpressure algorithm is throughput-optimal when the flow rates are within the capacity region, which is difficult to characterize in practice. This issue can be addressed by combining the backpressure algorithm with the Network Utility Maximization (NUM) framework, originally proposed for wireline networks. This framework leads to a simple distributed congestion control algorithm where the source node s of each flow f adjusts the flow rate $X_f$ as follows:

$$x^*_f = \arg \max_{x_f \geq 0} U_f(x_f) - x_f q_s^f = U_f'^{-1}(q_s^f) \,,$$

where $q_s^f$ is the congestion price, which is proportional to the number of packets in the queue of flow f at the source node Ns.

It can be proven that the congestion control mechanism of the last equation of $x^*_f$ regulates the flow rates so that they are within the network capacity region and also cooperates with the backpressure scheduler SC to provide various notions of fairness by solving the NUM problem for the case of wireless networks.

Moreover, the backpressure algorithm makes several assumptions mentioned hereafter.

It assumes a slotted time scale. At each slot, non-interfering links are selected for transmission in order to maximize throughput. Global synchronization and a TDMA MAC protocol are therefore required to define slot boundaries and control the access to the wireless medium.

Only non-interfering links can be scheduled in the same time slot. As a result, the interference pattern as well as the independent link sets must be known in advance. A low complexity interference estimation technique must then be in place to determine which links are allowed to transmit together.

Scheduling decisions are assumed to be made in a centralized fashion, since global knowledge of network state and queue backlogs are required. Also, the complexity of the computation can be very high and depends on the interference model. For general interference models, the optimal solution of the link scheduling problem in the equation

of μ* requires exhaustive search over all link capacity vectors, whose number grows exponentially with the number of links.

For a scheduling decision to be made, the scheduler SC must have knowledge of the network state (i.e. link quality and interference pattern) as well as the queue backlogs. In theory, this information must be known at every slot to calculate the throughput optimal schedule. Once the schedule is computed, it must be sent back to the nodes Nj for proper execution.

Memory resources on most wireless platforms are constrained to only a handful of packets, which prevents a complete backpressure hardware solution. A few functionalities (e.g. queuing management) must then be implemented at upper layers in the kernels (K), while others (e.g. the MAC protocol) must be directly realized in the wireless card firmware (FW).

It schedules links rather than nodes, for transmission at each slot. This means that if a link (i,j) is scheduled, node Ni must transmit only to node Nj.

The method according to the invention comprises two steps.

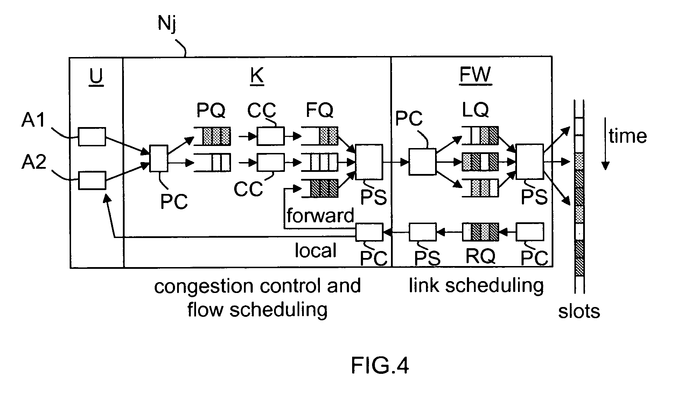

As illustrated in figure 2 and 4, the first step of the method consists in implementing at least one flow queue FQ into each kernel K of each node Nj and at least one link queue LQ into each firmware FW of each node Nj.

One means here by "queue" a storing means, such as a memory or buffer, possibly of the software type. High layer queues are typically implemented in software and low layer queues could be either software queues or hardware queues. Moreover, one means here by "link queue" a queue that is associated (and preferably dedicated) to a link established between two nodes Nj and Nj' (with j ≠ j') for allowing transmission of packets therebetween into multi-slot frames. More, one means here by "flow queue" a queue that is dedicated to a packet flow into a node Nj.

The second step of the method consists in coordinating, in each node Nj, the transfer of packets from its flow queue(s) FQ to its link queue(s) LQ as a function of coordination information that is provided by its MAC layer (located into its firmware FW) to its network layer (located into its kernel K) and that depends from the packets that are stored into its link queue(s) LQ and from scheduling information contained into a flow schedule.

One means here by "flow schedule" a schedule of flows that is defined for every node Nj and for each multi-slot frame.

The coordination of the packet transmission provides an up to date information of MAC layer link queues LQ to the network layer and enables a precise scheduling of the network layer flows in the MAC layer. It can be implemented into each node Nj by a control means CM of the device D (see figure 1).

According to the invention each flow schedule is computed by a scheduling means SM that constitutes a part of the device D and is located (here) into the scheduler SC (as illustrated in figures 1 and 3). Moreover, each flow schedule is computed from queue information that is representative of the number of packets that are stored, at least, into the flow queues FQ of all the nodes Nj.

The queue information is preferably transmitted by the nodes Nj to the scheduler SC, through the network WN.

Preferably, the queue information is not only representative of the number of packets that are stored into the flow queues FQ of all the nodes Nj but also of the number of packets of each flow that are stored into the link queues LQ of these nodes Nj. This allows the scheduler SC to perform accurate scheduling decisions based on the total length of the flow queues residing in the nodes Nj, which are both due to the packets in the kernel flow queues FQ and in the firmware link queues LQ. Moreover, knowledge of the total length of the flow queues FQ avoids deadlock situations where the scheduler SC sees zero flow queue length and then does not schedule the flow that should be transmitted while there exist packets of this flow in the associated link queue LQ in the firmware FW.

In order the total length addition of the flow queues FQ could be known by the scheduler SC, the kernel K of each node Nj may also contain a data structure to track the state of the link queues LQ in the associated firmware FW. More precisely, for each link queue LQ, one (the first part P1 of the control means CM) may maintain a link queue index called I_LQ which contains the indices of the flows that are currently in the link queue LQ.

Preferably, for each multi-slot frame the scheduling means SM may compute a flow schedule that comprises a sequence of schedule entries, where each entry contains a n-tuple (f,s,F,L) associated to one of the nodes Nj, with n at least equal to four (so each n-tuple is at least a 4-tuple). Each n-tuple (f,s,F,L) may comprise a frame number f designating a concerned frame, a slot number s designating the concerned slot in the concerned frame, during which the concerned node Nj is authorized to transmit, a flow queue identifier F designating a flow queue FQ of the concerned node Nj that stores a packet that must be transmitted during the concerned slot, and a link identifier L designating a link of the concerned node Nj from which the concerned packet should be transmitted.

As mentioned above, before the beginning of a new multi-slot frame the scheduler SC transmits the newly computed flow schedule to all the nodes Nj through the network WN.

When a node Nj receives a new flow schedule, its firmware FW, and more precisely a first part P1 of the local control means CM that is associated to it (FW), may determine for each slot of this new frame whether it is authorized to transmit. If this is the case, the firmware FW, and more precisely the control means first part P1, may determine from the scheduling information contained into this new flow schedule which link queue LQ will be used by the slotted access MAC protocol that runs in it, and then it may order to its associated firmware FW to transmit the concerned flow packet that is stored in this concerned link queue LQ during the concerned slot.

Before the beginning of each frame slot, the firmware FW of a node Nj, and more precisely the control means first part P1, may send a control packet, containing the current frame number f and slot number s in the firmware FW and information about each link queue LQ, to its associated kernel K, and more precisely to a second part P2 of the local control means CM. Such a control packet is intended for notifying about the next slot (s+1), in order the control means second part P2 could transfer chosen packets to the firmware FW based on the link queue information contained into this control packet.

For instance, information about a link queue LQ may comprise an identifier of this link queue LQ (for instance the MAC address of the neighbor of the concerned outgoing link), the length of this link queue LQ, and the cumulative number of packets that have been dequeued (i.e. succesfully transmitted or dropped) from this link queue LQ.

In fact, when the kernel K of a node Nj, and more precisely its associated control means second part P2, receives information about a link queue LQ (from the associated control means first part P1 of the firmware FW), it carries out four operations.

Firstly, it may determine how many packets are still stored into each link queue LQ since the last received control packet. This can be done by subtracting the cumulative number of packets (that have been dequeued from the considered link queue LQ) from the number of flow indices of pending packets maintained in the link queue index I_LQ (in the kernel K). Then it may dequeue (i.e. remove the first) indices from the link queue index I_LQ to reflect the fact that these packets have been dequeued from the corresponding link queue LQ.

Secondly, it may use the current frame number f and slot number s in the firmware FW to synchronize the estimates of frame and slot numbers it stores.

Thirdly, it may look at the current flow schedule (that it preferably stores) to drop any entries that correspond to frames and frame slots older than the current frame and slot in the firmware FW.

Fourthly, it may look at the current entry (f,s,F,L) of the current flow schedule (that it preferably stores) to determine the number of packets that are stored in the designated link queue LQ. This can be done by inspecting the corresponding link queue index I_LQ.

If there exists at least P stored packets in the designated link queue LQ, it considers that this link queue LQ contains enough packets to serve the next P slots. The parameter P accounts for delays for enqueing packets from the kernel K and firmware FW and should be preferably less than the maximum size allowed for the considered link queue LQ. So, it decides to do not send any other packet to the associated firmware FW (and more precisely its associated control means first part P1).

Now, if there exists less than P stored packets in the designated link queue LQ, it checks if the maximum storage capacity of the firmware FW (and more precisely its associated control means first part P1) has been reached. If this is the case, it does not take any action, while if this is not the case it transfers at least one stored packet from a concerned flow queue FQ to the concerned link queue LQ.

At the beginning of each slot of the frame, the firmware FW of a node Nj, and more precisely the control means first part P1, may check if its node Nj is allowed to transmit. If this node Nj is effectively allowed to transmit, its firmware FW (and more precisely the associated control means first part P1) may inspect the corresponding link queue LQ, and if this link queue LQ is non-empty, it may transmit the first packet from that link queue LQ by means of the MAC protocol. One assumes that the MAC protocol can determine success or failure of a packet transmission and can retransmit a packet in case of transmission failure. A packet is dequeued from a link queue LQ either when it is successfully transmitted or when a retransmission limit is exceeded.

At the end of a frame, a node Nj preferably sends back to the scheduler SC the length of each flow queue (i.e. the sum of the queue lengths in its current flow queue FQ and link queue index I_LQ or the queue length in its current flow queue FQ and the queue length in its current link queue index I_LQ).

One now refers to figures 2 to 4 to sum up an example of basic working cycle of the device D according to the invention. The part of the device D that is located into each node Nj (i.e. FQ, LQ and MC (P1 and P2)) runs a slotted MAC protocol, where a chosen number of slots are organized into frames. For each slot, this device node part selects a set of non-interfering links to transmit based on the flow queue lengths and the network state. Each node Nj therefore maintains per-flow queues FQ, and monitors adjacent links to estimate interference and losses. These flow queue lengths and network monitoring results are periodically transmitted to the scheduling means SM (of the scheduler SC) over an uplink control channel of the network WN. Upon reception of this information, the scheduling means SM updates its local topology and interference databases, and then runs a backpressure scheduler BS to compute the throughput-optimal flow schedule for multiple upcoming slots (i.e. a frame). Then the scheduler SC disseminates the computed flow schedule to the nodes Nj over a downlink control channel of the network WN. Then the parts of the device D that are located into the nodes Nj apply the new flow schedule for transmissions in the next frame. This working cycle repeats periodically.

Considered in the data plane in the nodes Nj (see figure 4), the device parts (FQ, LQ, MC (P1 and P2)) spans across the transport, network, and MAC layers of the protocol stack. The transport and network layers (that are located into the kernel K of each node Nj) implement congestion control and flow scheduling, respectively. The MAC layer (located into the firmware FW of each node Nj) implements link scheduling and a (TDMA) MAC protocol. For instance, the full MAC firmware FW resides on a wireless card while the kernel K (and therefore the upper layers) resides in the node operating system (OS).

In figure 4, each element or module designated by reference PC is a packet classifier, and each element or module designated by reference PS is a packet scheduler. The data flow from left to right consists in outgoing packets produced by applications A1 and A2 (residing into the application layer U of the node Nj) and that must be transmitted through the wireless medium. The data flow from right to left consists in incoming packets originating from the wireless medium and that must be routed into the node Nj or delivered to at least one node application A1 and/or A2. Packets in the slotted frame, that is represented in the far right part of figure 4 and is transmitted through the wireless medium, and which are neither incoming nor outgoing, are exchanged between other nodes Nj of the network WN.

After congestion control, packets enter the flow queue FQ and wait to be scheduled. The kernel packet scheduler PS is synchronized with the slotted MAC with respect to schedule, time slots, and link queue state. Shortly before a scheduled transmission slot starts, the kernel packet scheduler PS dequeues a packet from the scheduled flow queue FQ and sends it down to the concerned firmware link queue LQ for transmission according to the current flow schedule.

The link scheduling may be implemented as follows. The MAC protocol preferably maintains an individual transmission link queue LQ for each neighbor (i.e. link) in order to enable link scheduling. When packets dequeued from a flow queue FQ arrive at the firmware link packet classifier PC, they are classified according to their destination MAC address and inserted into the appropriate link queue(s) LQ. The slotted MAC protocol maintains network-wide node synchronization, and ensures that transmissions occur strictly within slot boundaries. When a transmission slot starts, the MAC protocol dequeues a packet from the scheduled link queue LQ and transmits it over the air (wireless medium). If the transmission fails, the packet remains in the scheduled link queue LQ until the next slot for the same neighbor (unless the retransmission limit has been reached).

The packet reception and forwarding may be implemented as follows. When a packet is received over the air, it is first filtered by a firmware packet classifier PC based on its destination MAC address and then inserted into a single receive queue RxQ of the firmware FW. The packet is delivered to the network layer in the kernel K, where it is routed and tagged for local delivery or forwarding. In the latter case, the packet is inserted into the concerned flow queue FQ and waits to be scheduled, just like a locally-generated packet.

Considered in the control plane, the nodes Nj and the scheduler SC (see figures 2 and 3) must exchange information to coordinate the network-wide transmissions by means of the device D and uplink and downlink channels.

For instance, the device D comprises actuator applications AA that are respectively located in the nodes Nj. Each actuator application AA communicates with the scheduling means SM located into the scheduler SC and in charge of computing a new flow schedule at the start of a each frame. At this point, the MAC protocol may notify the actuator application AA about the new frame and may piggyback in the same message the link statistics collected during the last frame (e.g. the received signal strength and the packet delivery ratio). Each actuator application AA then collects the flow queue lengths in its node Nj, combines all information and sends it to the scheduler SC.

When the scheduler SC receives all this information, its scheduling means SM may proceed to the computation of a new flow schedule as follows. First, it uses the received link statistics to estimate the network state, namely the interference relations and link losses, by means of a state estimator SE. Past information as well as the most recent information can be used for a more accurate estimate of the network state. The scheduling means SM comprises a backpressure scheduler BS which is fed with the received flow queue lengths and the network state to compute a maximal independent set of links for the first slot. The result may be stored in a schedule buffer SB and may be also transmitted to a queue estimator QE which also receives the flow queue lengths, so that estimates of flow queues FQ of the selected link set could be updated according to a predefined model. With the new estimates of flow queues FQ, the backpressure scheduler BS computes another maximum- weight independent set of non-interfering links for the second slot, and so on, until the last (and N-th) slot of the frame. When the N computations have been performed their N results constitute the new flow schedule.

This new flow schedule is then disseminated by the scheduler SC through the downlink control channel. The actuator application AA of each node Nj receives this new flow schedule and forwards it preferably both to the firmware FW (MAC protocol) and the kernel K, where they are stored by the first P1 and second P2 parts of the control means CM. Then the MAC protocol uses this new flow schedule for data transmission in the next frame. Similarly, packets will be dequeued from the flow queues FQ to the link queues LQ in accordance with this new flow schedule.

The invention is not limited to the embodiments of method, device, node (or communication equipment) and network equipment described above, only as examples, but it encompasses all alternative embodiments which may be considered by one skilled in the art within the scope of the claims hereafter.

**Claims**

1.  Method for scheduling packet transmissions into a network (WN) using a low layer protocol supporting a slotted access and comprising at least two nodes (Nj), each comprising a kernel (K) with a high layer and a firmware (FW) with said low layer protocol supporting a slotted access, said low layer protocol belonging to a low layer located in the OSI model at a level that is lower than the one of said kernel high layer, and a scheduling means (SM) for scheduling packet transmissions between said nodes (Nj) into multi-slot frames, **characterized in that** it comprises the steps of implementing at least one flow queue (FQ) into each kernel (K) of each node (Nj) and at least one link queue (LQ) into each firmware (FW) of each node (Nj), each link queue (LQ) being associated to a link established between two nodes (Nj, Nj') for packet transmission, and of coordinating, in each node (Nj), the transfer of packets from its flow queue(s) (FQ) to its link queue(s) (LQ) as a function of coordination information provided by said low layer protocol supporting a slotted access to a chosen high layer of said kernel and depending on the packets stored into its link queue(s) (LQ) and from scheduling information contained into a flow schedule defined for everyone of said nodes (Nj) and for each multi-slot frame by said scheduling means (SM) from queue information representative of the number of packets stored, at least, into the flow queues (FQ) of said nodes (Nj).

2.  Method according to claim 1, **characterized in that** said queue information is further representative of the number of packets of each flow that are stored into the link queues (LQ) of said nodes (Nj).

3.  Method according to one of claims 1 and 2, **characterized in that** for each multi-slot frame said scheduling means (SM) computes a flow schedule that comprises a sequence of schedule entries, where each entry contains a n-tuple (f,s,F,L), with n at least equal to four, associated to one of said nodes (Nj) and comprising a frame number (f), a slot number (s) designating the frame slot during which the concerned node (Nj) is authorized to transmit, a flow queue identifier (F) designating a flow queue (FQ) of said concerned node (Nj) that stores a packet to be transmitted, and a link identifier (L) designating a link of said concerned node (Nj) from which this packet should be transmitted.

4.  Method according to claim 3, **characterized in that** upon reception of a flow schedule in a node (Nj), the firmware (FW) of this node (Nj) determines for each slot of the current frame whether its node (Nj) is authorized to transmit and if this is the case it determines which link queue (LQ) will be used by said low layer protocol supporting a slotted access and then transmits the concerned flow packets that is stored in its concerned link queue (LQ).

5.  Method according to one of claims 3 and 4, **characterized in that** before the beginning of each slot of a frame, the firmware (FW) of a node (Nj) sends a control packet, containing the current frame number and slot number in said firmware (FW) and information about each link queue (LQ), to its associated kernel (K) to notify about the next slot in order to transfer chosen packets to said firmware (FW) based on said control packets.

6.  Method according to claim 5, **characterized in that** said information about a link queue (LQ) comprises an identifier of said link queue (LQ), the length of said link queue, and the cumulative number of packets that have been dequeued from this link queue (LQ).

7.  Method according to one of claims 5 and 6, **characterized in that** upon reception of said information about a link queue (LQ), said kernel (K) i) determines how many packets are still stored into each link queue (LQ) since the last control packet, ii) uses the current frame number and slot number in said firmware (FW) to synchronize estimates of frame and slot numbers it stores, iii) looks at said flow schedule to drop any entry that corresponds to a frame and a slot that are respectively older than the current frame and slot designated by said current frame number and slot number in said firmware (FW), and iv) looks at the current entry (f,s,F,L) of said flow schedule to determine the number of packets that are stored in the designated link queue (LQ), and if there exists at least P stored packets it considers that this link queue (LQ) contains enough packets to serve the next P slots and then decides to do not send any other packet to said firmware (FW), while if there exists less than P stored packets it checks if maximum storage capacity of said firmware (FW) has been reached, and if this is the case it does not take any action, while if this is not the case it transfers at least one stored packet from a concerned flow queue to the concerned link queue (LQ).

8.  Method according to one of claims 1 to 7, **characterized in that** said queue information is transmitted by each node (Nj) at the end of each frame.

9.  Device (D) for scheduling packet transmissions into a network (WN) using a low layer protocol supporting a slotted access and comprising at least two nodes (Nj), each comprising a kernel (K) with a high layer and a firmware (FW) with said low layer protocol supporting a slotted access, said low layer protocol belonging to a low layer located in the OSI model at a level that is lower than the one of said kernel high layer, and said device (D) comprising a scheduling means (SM) for scheduling packet transmissions between said nodes (Nj) into multi-slot frames, **characterized in that** it further comprises, into each node (Nj):

- at least one flow queue (FQ) located into said kernel (K),
- at least one link queue (LQ) located into said firmware (FW) and associated to a link established between two nodes (Nj, Nj') for packet transmission, and
- a control means (CM) arranged for coordinating the local transfer of packets from a flow queue (FQ) to a link queue (LQ) as a function of coordination information provided by the local node low layer protocol supporting a slotted access to a chosen high layer of the local node kernel (K) and depending on the packets stored into said link queue (LQ) and from scheduling information contained into a flow schedule defined for everyone of said nodes (Nj) and for each multi-slot frame,

and **in that** said scheduling means (SM) is arranged for defining each flow schedule associated to a frame from queue information representative of the number of packets stored, at least, into the flow queues (FQ) of said nodes (Nj).

10. Device according to claim 9, **characterized in that** said scheduling means (SM) is arranged for defining each flow schedule associated to a frame from queue information representative of the number of packets stored into the flow queues (FQ) of said nodes (Nj) and of the number of packets of each flow that are stored into the link queues (LQ) of said nodes (Nj).

11. Device according to one of claims 9 and 10, **characterized in that** said scheduling means (SM) is arranged for computing for each multi-slot frame a flow schedule that comprises a sequence of schedule entries, where each entry contains a n-tuple (f,s,F,L), with n at least equal to four, associated to one of said nodes (Nj) and comprising a frame number (f), a slot number (s) designating the frame slot during which the concerned node (Nj) is authorized to transmit, a flow queue identifier (F) designating a flow queue (FQ) of said concerned node (Nj) that stores a packet to be transmitted, and a link identifier (L) designating a link of said concerned node (Nj) from which this packet should be transmitted.

12. Device according to claim 11, **characterized in that** each control means (CM) comprises a first part (P1) associated to the firmware (FW) of its node (Nj) and arranged, upon reception of a flow schedule by its node (Nj), for determining, for each slot of the current frame, whether its node (Nj) is authorized to transmit and if this is the case which link queue (LQ) will be used by said low layer protocol supporting a slotted access and then for ordering to its associated firmware (FW) transmission of the concerned flow packets that is stored in the concerned link queue (LQ).

13. Node (Nj) intended for communicating into a network (WN) using a low layer protocol supporting a slotted access, said node (Nj) comprising a kernel (K) with a high layer and a firmware (FW) with said low layer protocol supporting a slotted access, said low layer protocol belonging to a low layer located in the OSI model at a level that is lower than the one of said kernel high layer, **characterized in that** said kernel (K) comprises at least one flow queue (FQ) of a device (D) according to one of claims 9 to 15, said firmware (FW) comprises at least one link queue (LQ) of a device (D) according to one of claims 9 to 12, and a control means (CM) of a device (D) according to one of claims 9 to 12.

14. Network equipment (SC) for a network (WN) using a low layer protocol supporting a slotted access, **characterized in that** it comprises a device (D) according to one of claims 9 to 12.

**Patentansprüche**

1. Verfahren zum Planen von Paketübertragungen in ein Netz (WN), das ein Protokoll einer niedrigen Schicht verwendet, das einen Zugriff auf der Grundlage von Schlitzen unterstützt, und das mindestens zwei Knoten (Nj), die jeweils einen Kern (K) mit einer hohen Schicht und eine Firmware (FW) mit dem Protokoll einer niedrigen Schicht, das einen Zugriff auf der Grundlage von Schlitzen unterstützt, umfassen, wobei das Protokoll einer niedrigen Schicht zu einer niedrigen Schicht gehört, die in dem OSI-Modell auf einer Ebene liegt, die niedriger als die der hohen Kernschicht ist, und ein Planungsmittel (SM) zum Planen von Paketübertragungen zwischen den Knoten (Nj) in Mehr-Schlitz-Rahmen umfasst, **dadurch gekennzeichnet, dass** das Verfahren die Schritte des Implementierens mindestens einer Flusswarteschlange (FQ) in jedem Kern (K) jedes Knotens (Nj) und mindestens einer Verbindungswarteschlange (LQ) in jeder Firmware (FW) jedes Knotens (Nj), wobei jede Verbindungswarteschlange (LQ) einer zwischen zwei Knoten (Nj, Nj') für die Paketübertragung aufgebauten Verbindung zugeordnet ist, und des Koordinierens der Übertragung von Paketen in jedem Knoten (Nj) von seinen einen oder mehreren Flusswarteschlangen (FQ) zu seinen einen oder mehreren Verbindungswarteschlangen (LQ) als eine Funktion von Koordinationsinformationen, die durch das Protokoll einer niedrigen Schicht, das einen Zugriff auf der Grundlage von Schlitzen auf eine gewählte hohe Schicht des Kerns unterstützt, bereitgestellt werden, und in Abhängigkeit von den in seinen einen oder mehreren Verbindungswarteschlangen (LQ) gespeicherten Paketen und von Planungsinformationen, die in einem für jeden der Knoten (Nj) und für jeden Mehr-Schlitz-Rahmen durch das Planungsmittel (SM) aus Warteschlangeninformationen, die die Anzahl von Paketen repräsentieren, die mindestens in den Flusswarteschlangen (FQ) der Knoten (Nj) gespeichert sind, definierten Flussplan enthalten sind, umfasst.

2.  Verfahren nach Anspruch 1, **dadurch gekennzeichnet, dass** die Warteschlangeninformationen ferner die Anzahl von Paketen jedes Flusses, die in den Verbindungswarteschlangen (LQ) der Knoten (Nj) gespeichert sind, repräsentieren.

3.  Verfahren nach einem der Ansprüche 1 und 2, **dadurch gekennzeichnet, dass** das Planungsmittel (SM) für jeden Mehr-Schlitz-Rahmen einen Flussplan berechnet, der eine Folge von Planeinträgen umfasst, wobei jeder Eintrag ein n-Tupel (f, s, F, L), wobei n mindestens gleich vier ist, enthält, das einem der Knoten (Nj) zugeordnet ist und das eine Rahmennummer (f), eine Schlitznummer (s), die den Rahmenschlitz bestimmt, währenddessen der betreffende Knoten (Nj) zu senden berechtigt ist, eine Flusswarteschlangenkennung (F), die eine Flusswarteschlange (FQ) des betreffenden Knotens (Nj), die ein zu sendendes Paket speichert, bestimmt und eine Verbindungskennung (L), die eine Verbindung des betreffenden Knotens (Nj), von der dieses Paket gesendet werden soll, bestimmt, umfasst.

4.  Verfahren nach Anspruch 3, **dadurch gekennzeichnet, dass** beim Empfang eines Flussplans in einem Knoten (Nj) die Firmware (FW) dieses Knoten (Nj) für jeden Schlitz des gegenwärtigen Rahmens bestimmt, ob ihr Knoten (Nj) zu senden berechtigt ist, und wenn das der Fall ist, bestimmt, welche Verbindungswarteschlange (LQ) von dem Protokoll einer niedrigen Schicht, das einen Zugriff auf der Grundlage von Schlitzen unterstützt, verwendet wird und daraufhin die betreffenden Flusspakete, die in seiner betreffenden Verbindungswarteschlange (LQ) gespeichert sind, sendet.

5.  Verfahren nach einem der Ansprüche 3 und 4, **dadurch gekennzeichnet, dass** vor dem Beginn jedes Schlitzes eines Rahmens die Firmware (FW) eines Knotens (Nj) ein Steuerpaket, das die gegenwärtige Rahmennummer und Schlitznummer in der Firmware (FW) und Informationen über jede Verbindungswarteschlange (LQ) enthält, an ihren zugeordneten Kern (K) sendet, um über den nächsten Schlitz zu benachrichtigen, um gewählte Pakete auf der Grundlage der Steuerpakete an die Firmware (FW) zu übertragen.

6.  Verfahren nach Anspruch 5, **dadurch gekennzeichnet, dass** die Informationen über eine Verbindungswarteschlange (LQ) eine Kennung der Verbindungswarteschlange (LQ), die Länge der Verbindungswarteschlange und die kumulative Anzahl von Paketen, die aus dieser Verbindungswarteschlange (LQ) entfernt worden sind, umfassen.

7.  Verfahren nach einen der Ansprüche 5 und 6, **dadurch gekennzeichnet, dass** der Kern (K) beim Empfang der Informationen über eine Verbindungswarteschlange (LQ) i) bestimmt, wie viele Pakete seit dem letzten Steuerpaket noch in jeder Verbindungswarteschlange (LQ) gespeichert sind, ii) die gegenwärtige Rahmennummer und Schlitznummer in der Firmware (FW) verwendet, um Schätzwerte der Rahmen- und Schlitznummern, die er speichert, zu synchronisieren, iii) den Flussplan betrachtet, um irgendeinen Eintrag, der einem Rahmen und einem Schlitz entspricht, die älter als der gegenwärtige Rahmen bzw. der gegenwärtige Schlitz sind, die durch die gegenwärtige Rahmennummer und Schlitznummer in der Firmware (FW) bestimmt sind, fallenzulassen, und iv) den gegenwärtigen Eintrag (f, s, F, L) des Flussplans betrachtet, um die Anzahl von Paketen, die in der bestimmten Verbindungswarteschlange (LQ) gespeichert sind, zu bestimmen, wobei er, wenn mindestens P gespeicherte Pakete vorhanden sind, betrachtet, dass diese Verbindungswarteschlange (LQ) genügend Pakete enthält, um die nächsten P Schlitze zu bedienen, und daraufhin entscheidet, kein weiteres Paket an die Firmware (FW) zu senden, während er, wenn weniger als P gespeicherte Pakete vorhanden sind, prüft, ob die maximale Speicherkapazität der Firmware (FW) erreicht worden ist, und wenn das der Fall ist, keine Maßnahme ergreift, während er, wenn das nicht der Fall ist, mindestens ein gespeichertes Paket von einer betreffenden Flusswarteschlange an die betreffende Verbindungswarteschlange (LQ) überträgt.

8. Verfahren nach einem der Ansprüche 1 bis 7, **dadurch gekennzeichnet, dass** die Warteschlangeninformationen durch jeden Knoten (Nj) am Ende jedes Rahmens übertragen werden.

9. Vorrichtung (D) zum Planen von Paketübertragungen in ein Netz (WN), das ein Protokoll einer niedrigen Schicht verwendet, das einen Zugriff auf der Grundlage von Schlitzen unterstützt, und das mindestens zwei Knoten (Nj), die jeweils einen Kern (K) mit einer hohen Schicht und eine Firmware (FW) mit dem Protokoll einer niedrigen Schicht, das einen Zugriff auf der Grundlage von Schlitzen unterstützt, umfassen, wobei das Protokoll einer niedrigen Schicht zu einer niedrigen Schicht gehört, die in dem OSI-Modell auf einer Ebene liegt, die niedriger als die der hohen Kernschicht ist, umfasst und wobei die Vorrichtung (D) ein Planungsmittel (SM) zum Planen von Paketübertragungen zwischen den Knoten (Nj) in Mehr-Schlitz-Rahmen umfasst, **dadurch gekennzeichnet, dass** sie ferner in jedem Knoten (Nj) umfasst:

   - mindestens eine Flusswarteschlange (FQ), die sich in dem Kern (K) befindet,
   - mindestens eine Verbindungswarteschlange (LQ), die sich in der Firmware (FW) befindet und die einer zwischen zwei Knoten (Nj, Nj') für die Paketübertragung aufgebauten Verbindung zugeordnet ist, und
   - ein Steuermittel (CM), das zum Koordinieren der lokalen Übertragung von Paketen von einer Flusswarteschlange (FQ) an eine Verbindungswarteschlange (LQ) als eine Funktion von Koordinationsinformationen, die durch das Protokoll einer niedrigen Schicht des lokalen Knotens, das einen Zugriff auf der Grundlage von Schlitzen auf eine gewählte hohe Schicht des Kerns (K) des lokalen Knotens unterstützt, bereitgestellt werden, und in Abhängigkeit von den in der Verbindungswarteschlange (LQ) gespeicherten Paketen und von in einem für jeden der Knoten (Nj) und für jeden Mehr-Schlitz-Rahmen definierten Flussplan enthaltenen Planungsinformationen ausgelegt ist,

   und dadurch, dass das Planungsmittel (SM) zum Definieren jedes Flussplans, der einem Rahmen zugeordnet ist, aus Warteschlangeninformationen, die die Anzahl der Pakete repräsentieren, die mindestens in den Flusswarteschlangen (FQ) der Knoten (Nj) gespeichert sind, ausgelegt ist.

10. Vorrichtung nach Anspruch 9, **dadurch gekennzeichnet, dass** das Planungsmittel (SM) zum Definieren jedes Flussplans, der einem Rahmen zugeordnet ist, aus Warteschlangeninformationen, die die Anzahl von Paketen, die in den Flusswarteschlangen (FQ) der Knoten (Nj) gespeichert sind, und die Anzahl von Paketen jedes Flusses, die in den Verbindungswarteschlangen (LQ) der Knoten (Nj) gespeichert sind, repräsentieren, ausgelegt ist.

11. Vorrichtung nach einem der Ansprüche 9 und 10, **dadurch gekennzeichnet, dass** das Planungsmittel (SM) zum Berechnen eines Flussplans, der eine Folge von Planeinträgen umfasst, für jeden Mehr-Schlitz-Rahmen ausgelegt ist, wobei jeder Eintrag ein n-Tupel (f, s, F, L), wobei n mindestens gleich vier ist, enthält, das einem der Knoten (Nj) zugeordnet ist und das eine Rahmennummer (f), eine Schlitznummer (s), die den Rahmenschlitz bestimmt, währenddessen der betreffende Knoten (Nj) zu senden berechtigt ist, eine Flusswarteschlangenkennung (F), die eine Flusswarteschlange (FQ) des betreffenden Knotens (Nj), die ein zu sendendes Paket speichert, bestimmt und eine Verbindungskennung (L), die eine Verbindung des betreffenden Knotens (Nj), von der dieses Paket gesendet werden soll, bestimmt, umfasst.

12. Vorrichtung nach Anspruch 11, **dadurch gekennzeichnet, dass** jedes Steuermittel (CM) ein erstes Teil (Pl) umfasst, das der Firmware (FW) seines Knotens (Nj) zugeordnet ist und das dafür ausgelegt ist, beim Empfang eines Flussplans durch seinen Knoten (Nj) für jeden Schlitz des gegenwärtigen Rahmens zu bestimmen, ob sein Knoten (Nj) zu senden berechtigt ist, und wenn das der Fall ist, welche Verbindungswarteschlange (LQ) durch das Protokoll einer unteren Schicht, das einen Zugriff auf der Grundlage von Schlitzen unterstützt, verwendet wird, und daraufhin für seine zugeordnete Firmware (FW) die Übertragung der betreffenden Flusspakete, die in der betreffenden Verbindungswarteschlange (LQ) gespeichert sind, zu bestellen.

13. Knoten (Nj), der zum Übermitteln in ein Netz (WN), das ein Protokoll einer niedrigen Schicht, das einen Zugriff auf der Grundlage von Schlitzen unterstützt, verwendet, bestimmt ist, wobei der Knoten (Nj) einen Kern (K) mit einer hohen Schicht und eine Firmware (FW) mit dem Protokoll einer niedrigen Schicht, das einen Zugriff auf der Grundlage von Schlitzen unterstützt, wobei das Protokoll einer niedrigen Schicht zu einer niedrigen Schicht gehört, die in dem OSI-Modell auf einer Ebene liegt, die niedriger als die der hohen Kernschicht ist, **dadurch gekennzeichnet, dass** der Kern (K) mindestens eine Flusswarteschlange (FQ) einer Vorrichtung (D) nach einem der Ansprüche 9 bis 15 umfasst, dass die Firmware (FW) mindestens eine Verbindungswarteschlange (LQ) einer Vorrichtung (D) nach einem der Ansprüche 9 bis 12 umfasst, und ein Steuermittel (CM) einer Vorrichtung (D) nach einem der Ansprüche 9 bis 12 umfasst.

**14.** Netzausrüstung (SC) für ein Netz (WN), das ein Protokoll einer niedrigen Schicht verwendet, das einen Zugriff auf der Grundlage von Schlitzen unterstützt, **dadurch gekennzeichnet, dass** die Netzausrüstung eine Vorrichtung (D) nach einem der Ansprüche 9 bis 12 umfasst.

**Revendications**

**1.** Procédé pour la programmation de transmissions de paquets vers un réseau (WN) à l'aide d'un protocole de couche inférieure prenant en charge un accès par créneaux et comprenant au moins deux noeuds (Nj), chacun comprenant un noyau (K) avec une couche supérieure et un micrologiciel (FW) avec ledit protocole de couche inférieure prenant en charge un accès par créneaux, ledit protocole de couche inférieure appartenant à une couche inférieure située dans le modèle QSI à un niveau inférieur à celui de ladite couche supérieure du noyau, et un moyen de programmation (SM) pour la programmation des transmissions de paquets entre lesdits noeuds (Nj) dans des trames à créneaux multiples, **caractérisé en ce qu'**il comprend les étapes d'implémentation d'au moins une file d'attente de flux (FQ) vers chaque noyau (K) de chaque noeud (Nj) et au moins une file d'attente de liaison (LQ) vers chaque micrologiciel (FW) de chaque noeud (Nj), chaque file d'attente de liaison (LQ) étant associée à une liaison établie entre deux noeuds (Nj, Nj') pour la transmission de paquets, et de coordination, dans chaque noeud (Nj), du transfert de paquets de sa ou ses files d'attente de flux (FQ) vers sa ou ses files d'attente de liaison (LQ) en tant que fonction d'information de coordination fournie par ledit protocole de couche inférieure prenant en charge un accès par créneaux vers une couche supérieure sélectionnée dudit noyau et dépendant des paquets stockés dans sa ou ses files d'attente de liaison (LQ) et des informations de programmation contenues dans un programme de flux défini pour chacun desdits noeuds (Nj) et pour chaque trame à créneaux multiples, par ledit moyen de programmation (SM) à partir des informations de file d'attente représentatives du nombre de paquets stockés, au moins, dans les files d'attente de flux (FQ) desdits noeuds (Nj).

**2.** Procédé selon la revendication 1, **caractérisé en ce que** lesdites informations de file d'attente sont représentatives, en outre, du nombre de paquets de chaque flux stockés dans les files d'attente de liaison (LQ) desdits noeuds (Nj).

**3.** Procédé selon une des revendications 1 et 2, **caractérisé en ce que**, pour chaque trame à créneaux multiples, ledit moyen de programmation (SM) calcule un programme de flux qui comprend une suite d'entrées de programme, dans lequel chaque entrée contient un n-uplet (f,s, F, L), dans lequel n est au moins égal à quatre, associé à un desdits noeuds (Nj) et comprenant un numéro de trame (f), un numéro de créneau (s) désignant le créneau de trame pendant lequel le noeud concerné (Nj) est autorisé à transmettre, un identifiant de file d'attente de flux (F) désignant une file d'attente de flux (FQ) dudit noeud concerné (Nj) qui stocke un paquet devant être transmis, et un identifiant de liaison (L) désignant une liaison dudit noeud concerné (Nj) à partir duquel ce paquet doit être transmis.

**4.** Procédé selon la revendication 3, **caractérisé en ce que**, à réception d'un programme de flux dans un noeud (Nj), le micrologiciel (FW) de ce noeud (Nj) détermine pour chaque créneau de la trame courante si son noeud (Nj) est autorisé à transmettre et, le cas échéant, détermine quelle file d'attente de liaison (LQ) sera utilisée par ledit protocole de couche inférieure prenant en charge un accès par créneaux, et transmet alors les paquets de flux concernés qui sont stockés dans sa file d'attente de liaison concernée (LQ).

**5.** Procédé selon une des revendications 3 et 4, **caractérisé en ce que**, avant le début de chaque créneau d'une trame, le micrologiciel (FW) d'un noeud (Nj) envoie un paquet de commande contenant le numéro de trame courante et le numéro de créneau dans ledit micrologiciel (FW) et les informations concernant chaque file d'attente de liaison (LQ) à son noyau associé (K) afin de l'informer à propos du prochain créneau, afin de transférer des paquets sélectionnés vers ledit micrologiciel (FW) en fonction desdits paquets de commande.

**6.** Procédé selon la revendication 5, **caractérisé en ce que** lesdites informations relatives à une file d'attente de liaison (LQ) comprennent un identifiant de ladite file d'attente de liaison (LQ), la longueur de ladite file d'attente ainsi que le nombre cumulé de paquets qui ne font plus partie de cette file d'attente de liaison (LQ).

**7.** Procédé selon l'une des revendications 5 et 6, **caractérisé en ce que**, à réception desdites informations relatives à une file d'attente de liaison (LQ), ledit noyau (K) i) détermine le nombre de paquets toujours stockés dans chaque file d'attente de liaison (LQ) depuis le dernier paquet de commande, ii) utilise le numéro de la trame courante et le numéro du créneau dans ledit micrologiciel (FW) afin de synchroniser les estimations de numéros de trames et de créneaux qu'il stocke, iii) prend note dudit programme de flux pour éliminer toute entrée qui correspondrait à une trame et un créneau respectivement plus antérieurs que la trame et le créneau courants désignés par ledit numéro de trame et de créneau courants dudit micrologiciel (FW), et iv) prend note de l'entrée courante (f, s, F, L) dudit programme de flux afin de déterminer le nombre de paquets stockés dans la file d'attente désignée (LQ), et, s'il existe au moins P paquets stockés, il considère que cette file d'attente de liaison (LQ) contient suffisamment de paquets pour servir les P créneaux suivants et décide alors de ne pas envoyer d'autres paquets vers ledit micrologiciel (FW), alors que s'il y a moins de P paquets stockés, il vérifie si la capacité de stockage maximum dudit micrologiciel (FW) a été atteinte, et, le cas échéant, il n'entreprend aucune action, tandis que si ce n'est pas le cas, il transfère au moins un paquet stocké d'une file d'attente de flux concernée à la file d'attente de liaison concernée (LQ).

8. Procédé selon l'une des revendications 1 à 7, **caractérisé en ce que** lesdites informations relatives à la file d'attente sont transmises par chaque noeud (Nj) à la fin de chaque trame.

9. Dispositif (D) pour la programmation des transmissions de paquets dans un réseau (WN) à l'aide d'un protocole de couche inférieure prenant en charge un accès par créneaux et comprenant au moins deux noeuds (Nj), chacun composé d'un noyau (K) avec une couche supérieure ainsi que d'un micrologiciel (FW) avec ledit protocole de couche inférieure prenant en charge un accès par créneaux, ledit protocole de couche inférieure appartenant à une couche inférieure située dans le modèle OSI à un niveau inférieur à celui de ladite couche supérieure du noyau, et ledit dispositif (D) comprenant un moyen de programmation (SM) pour la programmation de transmissions de paquets entre lesdits noeuds (Nj) dans des trames à créneaux multiples, **caractérisé en ce qu'**il comprend en outre, dans chaque noeud (Nj) :

- au moins une file d'attente de flux (FQ) située dans ledit noyau (K),
- au moins une file d'attente de liaison (LQ) située dans ledit micrologiciel (FW) et associée à une liaison établie entre deux noeuds (Nj, Nj') pour la transmission de paquets, et
- un moyen de commande (CM) agencé afin de coordonner le transfert local de paquets d'une file d'attente de flux (FQ) vers une file d'attente de liaison (LQ) en tant que fonction d'informations de coordination fournies par le protocole de noeud local de couche inférieure prenant en charge un accès par créneaux vers une couche supérieure choisie du noyau du noeud local (K) et dépendant des paquets stockés dans ladite file d'attente de liaison (LQ) et à partir d'informations de programmation contenues dans un programme de flux défini pour chacun desdits noeuds (Nj) et pour chaque trame à créneaux multiples,

et **en ce que** ce dit moyen de programmation (SM) est agencé afin de définir chaque programme de flux associé à une trame à partir d'informations de file d'attente représentatives du nombre de paquets stockés, au moins, dans les files d'attente de flux (FQ) desdits noeuds (Nj).

10. Dispositif selon la revendication 9, **caractérisé en ce que** ledit moyen de programmation (SM) est agencé pour définir chaque programme de flux associé à une trame à partir d'informations de file d'attente représentatives du nombre de paquets stockés dans les files d'attente de flux (FQ) desdits noeuds (Nj) et du nombre de paquets de chaque flux qui sont stockés dans les files d'attente de liaison (LQ) desdits noeuds (Nj).

11. Dispositif selon une des revendications 9 et 10, **caractérisé en ce que** ledit moyen de programmation (SM) est agencé pour calculer, pour chaque trame à créneaux multiples, un programme de flux qui comprend une séquence d'entrées de programme, où chaque entrée contient un n-uplet (f,s, F, L), dans lequel n est au moins égal à quatre, associé à un desdits noeuds (Nj) et comprenant un numéro de trame (f), un numéro de créneau (s) désignant le créneau de trame pendant lequel le noeud concerné (Nj) est autorisé à transmettre, un identifiant de file d'attente de flux (F) désignant une file d'attente de flux (FQ) dudit noeud concerné (Nj) qui stocke un paquet devant être transmis, et un identifiant de liaison (L) désignant une liaison dudit noeud concerné (Nj) à partir duquel ce paquet doit être transmis.

12. Dispositif selon la revendication 11, **caractérisé en ce que** chaque moyen de commande (CM) comprend une première partie (PI) associée au micrologiciel (FW) de ce noeud (Nj) et agencée, à réception d'un programme de flux par son noeud (Nj), pour déterminer, pour chaque créneau de la trame courante, si son noeud (Nj) est autorisé à transmettre, et, le cas échéant, quelle file d'attente de liaison (LQ) sera utilisée par ledit protocole de couche inférieure prenant en charge un accès par créneaux, et pour ordonner alors à son micrologiciel associé (FW), la transmission des paquets de flux concernés qui sont stockés dans la file d'attente de liaison concernée (LQ).

13. Noeud (Nj) prévu pour la communication dans un réseau (WN) à l'aide d'un protocole de couche inférieure prenant en charge un accès par créneaux, ledit noeud (Nj) comprenant un noyau (K) avec une couche supérieure et un micrologiciel (FW) avec ledit protocole de couche inférieure prenant en charge un accès par créneaux, ledit protocole

EP 2 432 171 B1

de couche inférieure appartenant à une couche inférieure située dans le modèle OSI à un niveau inférieur à celui de ladite couche supérieure du noyau, **caractérisé en ce que** ledit noyau (K) comprend au moins une file d'attente de flux (FQ) d'un dispositif (D) selon une des revendications 9 à 15, ledit micrologiciel (FW) comprend au moins une file d'attente de liaison (LQ) d'un dispositif (D) selon une des revendications 9 à 12, et un moyen de commande (CM) d'un dispositif (D) selon une des revendications 9 à 12.

14. Équipement de réseau (SC) pour un réseau (WN) utilisant un protocole de couche inférieure prenant en charge un accès par créneaux, **caractérisé en ce qu'**il comprend un dispositif (D) selon une des revendications 9 à 12.

FIG.1

FIG.2

FIG.3

congestion control and
flow scheduling          link scheduling

FIG.4

**EP 2 432 171 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1209862 A